# EUROPEAN PATENT SPECIFICATION

(11) **EP 0 495 290 B1**
(45) Date of publication and mention of the grant of the patent: **07.06.1995**
(21) Application number: 91306636.1
(22) Date of filing: 22.07.1991
(51) Int. Cl.: E05D 15/50, B60R 7/04

(54) **Releasable double-hinge device for an automobile console box**
Eine lösbare zweiseitige Scharniervorrichtung für einen Konsolenkasten eines Fahrzeuges
Un dispositif à charnière bilatérale décrochable pour une console centrale d'automobile

(30) Priority: 16.01.1991 JP 15825/91
(43) Date of publication of application: 22.07.1992
(73) Proprietor: Kato Hatsujo Kaisha Ltd., Yokohama-shi Kanagawa-ken (JP)
(72) Inventor: Aihara, Masahiro, Hodogaya-ku Yokohama-shi (JP); Suzuki, Hiroyuki, Hodogaya-ku Yokohama-shi (JP)
(74) Representative: Gibson, Stewart Harry

(56) References cited:
- FR-A- 2 623 779
- US-A- 3 624 387

## Description

This invention relates to a double-hinge device for a box having a main body provided with an opening and a lid for closing the box, the hinge device comprising locking members arranged along opposite lateral edges of the main body of the box, each locking member comprising an upright portion and a horizontal portion which extends along the respective lateral edge of the main body of the box, the upright portion being pivoted at one end thereof to the box such that the locking member may be tilted outwardly through a given angle away from the upright position and returned to the upright position by means of a recoil spring, and respective catch members arranged at corresponding positions along the lateral edges of the innerside of the box lid, each catch member having a slot which is open at its outer end for removably receiving the horizontal portion of a corresponding locking member, said locking member and said catch member being releasable from each other by moving the box lid laterally, so that the box lid may be pivoted open around the opposite lateral edge of the box, the hinge device further comprising an inclined edge which tilts the locking member as the lid is closed and guides its horizontal portion into the slot in the catch member, thereby locking the lid once the recoil spring has returned the upright portion of the locking member to its upright position.

A double-hinge device of this type is disclosed in US 3 624 387, which shows a lighting fixture comprising a box for fitting to the ceiling and a lens which closes the box. The lens can be hinged open along either lateral edge of the box, in order to gain access to the light fittings inside.

A disadvantage of this arrangement is that the lens can be detached when the box is open, thereby making the arrangement unsuitable for uses such as the lids of console boxes for automobiles or electric rice boilers or cabinet doors.

Thus, in accordance with this invention there is provided a double-hinge device of the above-defined type, characterised in that each locking member comprises a pivotal pillar having an upright member and a horizontal lock shaft extending from its top along the respective lateral edge of the box, each of said catch members being provided with a said inclined edge which presses against its respective lock shaft when the lid is closed, so as to tilt the pivotal pillar and guide the lock shaft into the slot in the catch member, and in that each of said pivotal pillars on opposite lateral edges of the main body of the box has an anti-slip-out member provided with a stopper portion which abuts a corresponding slider member on the box lid when the box lid is opened or closed.

When the lid is closed, the lock shafts arranged on opposite lateral edges of the main body of the box are engaged with the respective slots of the lock section on the box lid, so that the lid cannot be unintentionally opened if it is simply pulled upwardly.

In order to open the box lid from the left, the lid is moved to the right until all of the pivotal pillars on the left edge of the box disengage from the slots in the corresponding lock sections on the lid. Similarly, to open the box from the right the lid is moved to the left until all of the pivotal pillars on the right edge of the box disengage from the slots in the corresponding lock sections on the lid.

As the box is opened, the slider members on the hinged side of the box lid engage the corresponding stopper portions of the anti-slip-out members on the hinged side of the main body of the box, so that the lid will not become detached from the main body it it is pulled upwardly whilst it is open.

When the lid is closed, the inclined edges of the lock sections abut the corresponding lock sections of the pivotal pillars and tilt them outwardly against the bias of their springs until the shafts snap-engage into the slots.

An embodiment of this invention will now be described by way of example only and with reference to the accompanying drawings, in which:
FIGURE 1 is a sectional view of an automobile console box having a double-hinge device in accordance with this invention, shown when the lid is open;
FIGURE 2 is a similar sectional view of the console box, shown when the lid is open;
FIGURE 3 is a perspective view of a pivotal pillar of the double-hinge device; and
FIGURES 4(A) and (B) are sectional views through an anti-slip-out member and its neighbouring area of the double-hinge device of Figure 1, shown when the lid is closed and opened respectively.

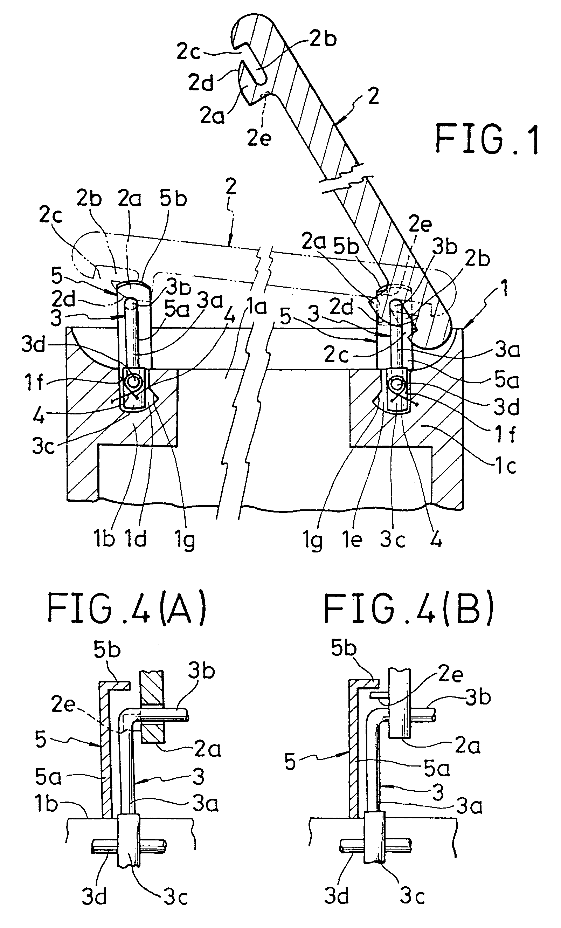

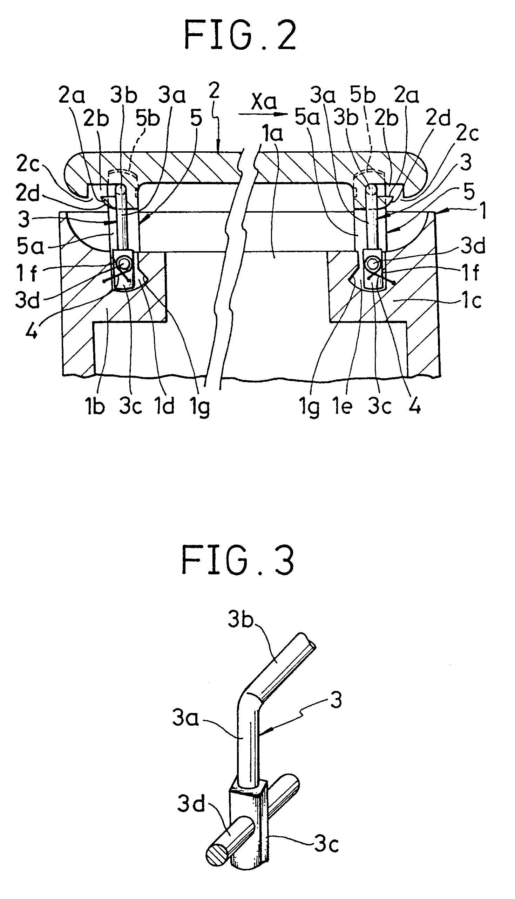

Referring to Figures 1 and 2 of the drawings, there is shown an automobile console box comprising a main body, which has an opening 1a, and a lid 2. A corresponding number of pivotal pillars 3 are arranged along opposite lateral edges 1b,1c of the main body 1 of the box. The same number of lock sections 2a are disposed along opposite lateral edges of the box lid 2 at positions corresponding to those of the pivotal pillars 3.

Referring to Figure 3 of the drawings, each of the pivotal pillars comprises an upright member 3a connected at its top to a horizontal lock shaft 3b which extends along one of the lateral edges 1b,1c of the main body 1 of the box. Each upright member 3a has a thick base section 3c at its lower end accommodated in a cavity 1d or 1e formed in lateral edges 1b or 1c respectively of the main body 1 of the box. An anchor pin 3d pivots the upright member 3a to the main body 1 of the box.

Each of the cavities 1d,1e has an upright outside wall 1f and a recessed inside wall 1g, so that the upright member 3a of the corresponding pivotal pillar 3 may not be inwardly tilted, since it is blocked by said upright outside wall 1f. However, the pillar 3 may be outwardly tilted by a given angle (typically approximately 30°) until it abuts the recessed inside wall 1g. The tilted pivotal pillar 3 is restored to its upright position by a recoil spring 4 wound around the anchor pin 3d whose opposite ends are rigidly fitted to the pivotal pillar 3 and the box main body 1.

Each of said lock sections 2a of the box lid 2 comprises an outwardly facing hook 2a which defines a horizontal slot 2b, so that the corresponding lock shaft 3b may be engaged with and released from the lock section 2 by way of an opening 2c in the slot 2b.

The lower edge 2d of the lock section 2a is rounded and inclined relative to the box lid 2 so that the front end of the inclined edge 2d is pointed outward and upward.

Referring to Figures 1, 4(A) and 4(B) of the drawings, an anti-slip-out member 5 comprises a support portion 5a standing upward from the lateral edge 1b or 1c and a stopper portion 5b laterally projecting from the top of the support portion 5a towards the corresponding pivotal pillar 3. The corresponding lock section 2a comprises a slider member 2e.

When the lid 2 is closed, the pivotal pillars 3 are held upright by the springs 4, so that the lock shafts 3b remain engaged with the lock sections 2a on the lid 2 of the box.

To open the box, the lid 2 is slid to the right as shown by arrow Xa in Figure 2. The lock shafts 3b on the left edge of the main body 1 of the box slide along the slots 2b of the corresponding lock sections 2a, since the pivotal pillars 3 on the left side of the box are not able to tilt to the right with the lid 2. The pivotal pillars 3 on the right edge of the main body 1 of the box are tilted outwardly so that their lock shafts 3b remain in the corresponding slots 2b of the lid. Further movement of the lid 2 in the directions Xa causes the lock shafts 3b along the left edge of the main body 1 of the box to disengage from the corresponding slots 2b of the lid, through the openings 2c. This releases the left-hand edge of the lid 2, so that it can be lifted upwards to pivot around the lock shafts 3b on the right hand edge of the main body 1 of the box. Alternatively, the lid may be opened along the right hand edge by closing the box and sliding the lid to the left.

When the lid 2 is open, the slider members 2e on the hinged side of the box abut the corresponding stopper portions 5b of the anti-slip-out members 5, thereby preventing the lid 2 from being unintentionally disengaged from the main body 1 of the box.

To close the box, the lid 2 is hinged downwards until the inclined edge of the lock sections 2a abuts the lock shafts 3b, thereby tilting the pillars 3 outwards until the lock shafts 3b enter their respective slots 2b in the lid, through the openings 2c.

The lid 2 can be disengaged from the main body 1 of the box by first releasing one edge of the lid 2, by sliding the lid in one direction as described above, then releasing the other edge of the lid by sliding the lid in the opposite direction. During this procedure, the stopper portion 5b of the anti-slip-out members 5 do not engage with the slider members 2e on the lid, since the lid is not pivoted sufficiently far open. Thus, the lid 2 can be disengaged from the main body 1 of the box.

## Claims

1. A double-hinge device for a box having a main body (1) provided with an opening (1a) and a lid (2) for closing the box, the hinge device comprising locking members (3) arranged along opposite lateral edges (1b,1c) of the main body (1) of the box, each locking member (3) comprising an upright portion (3a) and a horizontal portion (3b) which extends along the respective lateral edge of the main body (1) of the box, the upright portion (3a) being pivoted at one end thereof to the box (1) such that the locking member (3) may be tilted outwardly through a given angle away from the upright position and returned to the upright position by means of a recoil spring (4), and respective catch members (2a) arranged at corresponding positions along the lateral edges of the innerside of the box lid (2), each catch member (2a) having a slot (2b) which is open at its outer end for removably receiving the horizontal portion (3b) of a corresponding locking member (3), said locking member (3) and said catch member (3a) being releasable from each other by moving the box lid (2) laterally, so that the box lid may be pivoted open around the opposite lateral edge of the box (1b or 1c), the hinge device further comprising an inclined edge (2d) which tilts the locking member (3) as the lid (2) is closed and guides its horizontal portion (3b) into the slot (2b) in the catch member (2a), thereby locking the lid (2) once the recoil spring (4) has returned the upright portion (3a) of the locking member to its upright position, the hinge device being characterised in that each locking member comprises a pivotal pillar (3), having an upright member (3a) and a horizontal lock shaft (3b) extending from its top along the respective lateral edge of the box, each of said catch members (2a) being provided with a said inclined edge (2d) which presses against its respective lock shaft (3b) when the lid is closed, so as to tilt the pivotal pillar (3) and guide the lock shaft (3b) into the slot (2b) in the catch member (2a), and in that each of said pivotal pillars (3) on opposite lateral edges of the main body (1) of the box has an anti-slip-out member (5) provided with a stopper portion (5b) which abuts a corresponding slider member (2e) on he box lid (2) when the box lid is opened or closed.

## Patentansprüche

1. Doppelscharniereinrichtung für einen Behälter mit einem Hauptteil (1), der mit einer Öffnung (1a) und einem Deckel (2) zum Schließen des Behälters versehen ist, wobei die Scharniereinrichtung Verriegelungsglieder (3), die entlang gegenüberliegenden Seitenrändern (1b, 1c) des Hauptteils (1) des Behälters angeordnet sind, wobei jedes Verriegelungsglied (3) einen aufrecht stehenden Teil (3a) und einen horizontalen Teil (3b) aufweist, der sich entlang dem entsprechenden Seitenrand des Hauptteils (1) des Behälters erstreckt, wobei der aufrecht stehende Teil (3a) an seinem einen Ende schwenkbar am Behälter (1) angebracht ist, so daß das Verriegelungsglied (3) um einen vorgegebenen Winkel nach außen weg von der aufrecht stehenden Stellung gekippt und in die aufrecht stehende Stellung zurückgeführt werden kann mit Hilfe einer Rückführfeder (4), und entsprechende Fallen- oder Rastenglieder (2a) aufweist, die an entsprechenden Stellen entlang den Seitenrändern der Innenseite des Behälterdeckels (2) angeordnet sind, wobei jedes Fallen- oder Rastenglied (2a) einen Schlitz (2b) hat, der an seinem äußeren Ende zum entfernbaren Aufnehmen des horizontalen Teils (3b) eines entsprechenden Verriegelungsgliedes (3) offen ist, wobei das Verriegelungsglied (3) und das Fallen- oder Rastenglied (2a) voneinander lösbar sind, indem der Behälterdeckel (2) seitlich bewegt wird, so daß der Behälterdeckel um den gegenüberliegenden Seitenrand des Behälters (1b oder 1c) in seine offene Stellung geschwenkt werden kann, wobei die Scharniereinrichtung weiter eine geneigte Kante (2d) aufweist, die das Verriegelungsglied (3) kippt, wenn der Deckel (2) geschlossen wird, und dessen horizontalen Teil (3b) in den Schlitz (2b) des Fallen- oder Rastengliedes (2a) führt, wobei der Deckel (2) verriegelt wird, nachdem die Rückführfeder (4) den aufrecht stehenden Teil (3a) des Verriegelungsgliedes in seine aufrecht stehende Stellung zurückgeführt hat, wobei das Scharnier dadurch gekennzeichnet ist, das jedes Verriegelungsglied eine schwenkbare Säule (3) aufweist, die ein aufrecht stehendes Glied (3a) und einen horizontalen Verriegelungsschaft (3b) aufweist, der sich von dessen Oberseite entlang dem entsprechenden Seitenrand des Behälters erstreckt, wobei jedes Fallen- oder Rastenglied (2a) mit einer der geneigten Kanten (2d) versehen ist, die gegen den entsprechenden Verriegelungsschaft (3b) drückt, wenn der Deckel geschlossen wird, so daß die schwenkbare Säule (3) gekippt und der Verriegelungsschaft (3b) in den Schlitz (2b) des Fallen- oder Rastengliedes (2a) geführt wird, und daß jede der schwenkbaren Säulen (3) an gegenüberliegenden Seitenrändern des Hauptteils (1) des Behälters ein das Herausgleiten hinderndes Glied (5) aufweist, das mit einem Anschlagteil (5b) versehen ist, der an einem entsprechenden Gleitstück (2e) des Behälterdeckels (2) anliegt, wenn der Behälterdeckel geöffnet oder geschlossen ist oder wird.

## Revendications

1. Dispositif à charnière bilatérale pour une boîte comprenant un corps principal (1) pourvu d'une ouverture (1a) et un couvercle (2) permettant de fermer la boîte, le dispositif à charnière comprenant des éléments de verrouillage (3) disposés le long de bords latéraux opposés (1b, 1c) du corps principal (1) de la boîte, chaque élément de verrouillage (3) comprenant une portion verticale (3a) et portion horizontale (3b) qui s'étend le long du bord latéral respectif du corps principal (1) de la boîte, la portion verticale (3a) étant montée pivotante, à une de ses extrémité, sur la boîte (1) de façon que l'élément de verrouillage (3) puisse être incliné vers l'extérieur d'un angle donné par rapport à la position verticale et être ramené à la position verticale au moyen d'un ressort de rappel (4), et d'éléments de prise (2a) respectifs disposés à des positions correspondantes le long des bords latéraux du côté interne du couvercle (2) de la boîte, chaque élément de prise (2a) présentant une fente (2b) qui est ouverte à son extrémité externe afin de recevoir de façon amovible la portion horizontale (3b) d'un élément de verrouillage (3) correspondant, ledit élément de verrouillage (3) et ledit élément de prise (2a) pouvant être dégagés l'un de l'autre par déplacement latéral du couvercle (2) de la boîte, de façon que le couvercle puisse être ouvert par pivotement autour du bord latéral opposé de la boîte (1b) ou 1c), le dispositif à charnière comprenant également un bord incliné (2d) qui fait basculer l'élément de verrouillage (3) lorsque le couvercle (2) est fermé et guide sa portion horizontale (3b) dans la fente (2b) de l'élément de prise (2a), verrouillant ainsi le couvercle (2) après que le ressort de rappel (4) a ramené la portion verticale (3a) de l'élément de verrouillage à sa position verticale,
le dispositif à charnière étant caractérisé en ce que chaque élément de verrouillage comprend une colonne pivotante (3), possédant un élément vertical (3a) et une tige de verrouillage horizontale (3b) s'étendant à partir de son sommet le long du bord latéral respectif de la boîte, chacun desdits éléments de prise (2a) étant pourvu dudit bord incliné (2d) qui appuie sur sa tige de verrouillage respective (3b) lorsque le couvercle (2) est fermé, de façon à faire basculer la colonne pivotante (3) et guider la tige de verrouillage (3b) dans la lente (2b) de l'élément de prise (2a), et en ce que chacune desdites colonnes pivotantes (3) sur les bords latéraux opposés du corps principal (1) de la boîte possède un élément antidécrochage (5) pourvu d'une portion d'arrêt (5b) qui s'appuie contre un élément glissant correspondant (2e) du couvercle (2) quand le couvercle est ouvert ou fermé.
